**Europäisches Patentamt**

**European Patent Office**

**Office européen des brevets**

(19)

(11) Veröffentlichungsnummer : **0 370 210 B1**

(12)

# EUROPÄISCHE PATENTSCHRIFT

(45) Veröffentlichungstag der Patentschrift :
**30.12.92 Patentblatt 92/53**

(51) Int. Cl.$^5$ : **B23B 51/10**

(21) Anmeldenummer : **89118358.4**

(22) Anmeldetag : **04.10.89**

(54) **Entgratwerkzeug mit Schneidmesser.**

(30) Priorität : **23.11.88 DE 3839423**

(43) Veröffentlichungstag der Anmeldung :
**30.05.90 Patentblatt 90/22**

(45) Bekanntmachung des Hinweises auf die
Patenterteilung :
**30.12.92 Patentblatt 92/53**

(84) Benannte Vertragsstaaten :
**AT BE CH DE ES FR GB GR IT LI LU NL SE**

(56) Entgegenhaltungen :
**EP-A- 0 129 116**
**DE-A- 2 525 872**

(73) Patentinhaber : **Heule, Heinrich**
**Kristallstrasse 6**
**CH-9434 Au (CH)**

(72) Erfinder : **Heule, Heinrich**
**Kristallstrasse 6**
**CH-9434 Au (CH)**

(74) Vertreter : **Riebling, Peter, Dr.-Ing.,**
**Patentanwalt**
**Rennerle 10, Postfach 31 60**
**W-8990 Lindau/B. (DE)**

EP 0 370 210 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Entgratwerkzeug, das um eine Rotationsachse gedreht wird und wenigstens ein sich radial nach außen erstreckendes Schneidmesser zum beidseitigen Entgraten der Kanten von Durchgangsbohrungen eines Werkstücks aufweist, wobei das Schneidwerkzeug entgegen einer Federkraft radial nach außen gedrückt wird und bei Werkzeugvorschuß in das Entgratwerkzeug einwärts bewegbar ist, und eine radiale Anlagefläche und Schneidkanten aufweist.

Ein derartiges Entgratwerkzeug ist aus der DE-OS 25 25 872 bekannt, mit dem jedoch nur geradlinige Fasen in ein Werkstück einbringbar sind.

Daher ist es Aufgabe der Erfindung ein Entgratwerkzeug zu schaffen, mit dem auch gekrümmte Fasen herausarbeitbar sind.

Die Aufgabe der Erfindung wird durch die Merkmale des Patentanspruchs 1 gelöst.

Gemäß des Erfindung sind Senkungen einbringen, die nicht nur in einem bestimmten Winkel zur Längsachse der Durchgangsbohrung entsprechend der Ausrichtung der Schneidkante des Messers zur Vertikalen das Material abträgt und eine im Schnitt geradlinige, ebene Fasenfläche erstellt, sondern der einzubringenden Fase im Schnitt auch eine beliebig andere Form und einen beliebig anderen Winkel zur Längsachse der Durchgangsbohrung bei unverändert geradliniger Schneidkante geben kann, ist in einer Ausführungsform dieser Erfindung ein im Werkzeugkopf integriert angeordnetes Schneidmesser vorgesehen, welches das Material im rechten Winkel zur Vorschubrichtung des Werkzeuges abträgt, wobei der Winkel der einzubringenden Fase zur Langsachse der Durchgangsbohrung und die Form der Fase allein durch die Ausrichtung der Gleitpartie zur Vertikalen bzw. durch deren Formgebung bestimmt wird, die dann anliegend gegen die ausgeformte Fase das federbeaufschlagte Messer in Vorschubrichtung des Werkzeugkopfes radial einwärts drückt.

In der Ausbildung eines solchen Messers ist vorgesehen, daß die Schneidkante des rechtwinklig zur Senkrichtung abtragenden Schneidmessers in einem Winkel von 90° und die Gleitpartie in einen beliebig kleineren Winkel zur Vertikalen angeordnet ist. Die Gleitpartie kann dabei in Form einer Geraden, konkav, konvex oder unregelmäßig gekrümmt sein.

Es zeigen:

Figur 1: im Schnitt eine doppelte Durchgangsbohrung, welche mit einem Entgratwerkzeug nach der Erfindung entgratet bzw. angefast werden soll;

Figur 2: einen Schnitt durch das Entgratwerkzeug zur zusätzlichen Darstellung einer Druckpunktschraube;

Figur 3: ein Schneidmesser nach der Erfindung in Vorderansicht;

Figur 4: der Werkzeugkopf mit Schneidmessern einer Ausführungsform in Ausgangsstellung mit schematischer Darstellung der Bearbeitungsweise am Werkstück.

Figur 5: ein Schneidmesser nach der Erfindung in Seitenansicht

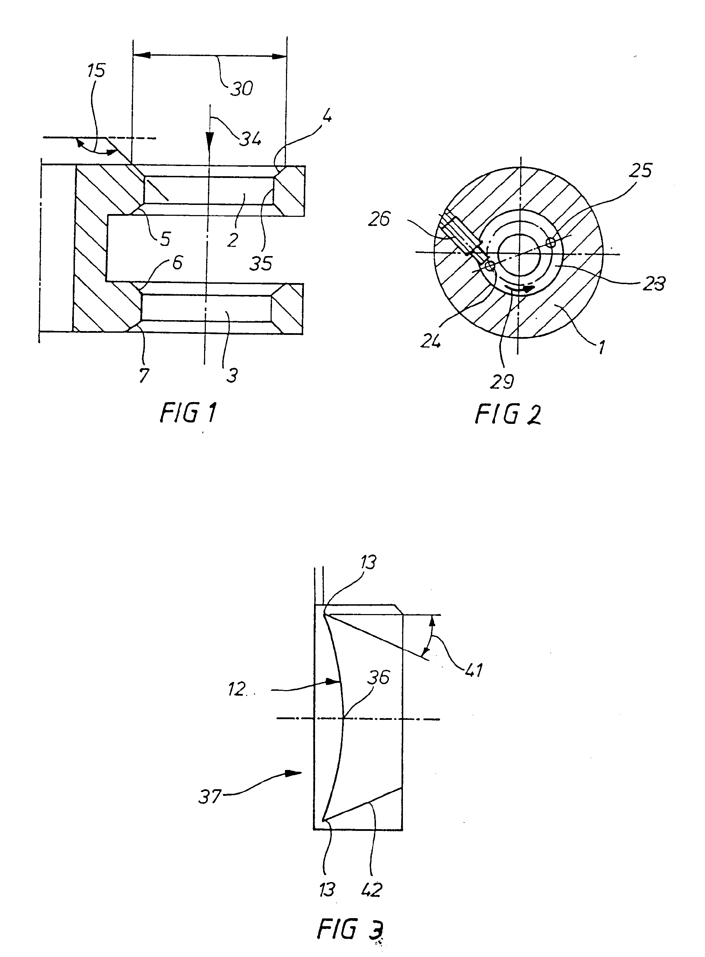

Die Verstellung der Schneidmesser 37,38 erfolgt hierbei nach Figur 2 unter der Wirkung einer federbelasteten Wippe 23, die an ihrer unteren Stirnseite jeweils einen Bolzen 24,25 aufweist, die jeweils in einen Schlitz 27 jeweils eines Schneidmessers 37,38 eingreifen.

Durch Verdrehung der Wippe 23 in Pfeilrichtung 29 kann damit die Verschiebung der Schneidmesser 37,38 eingestellt werden.

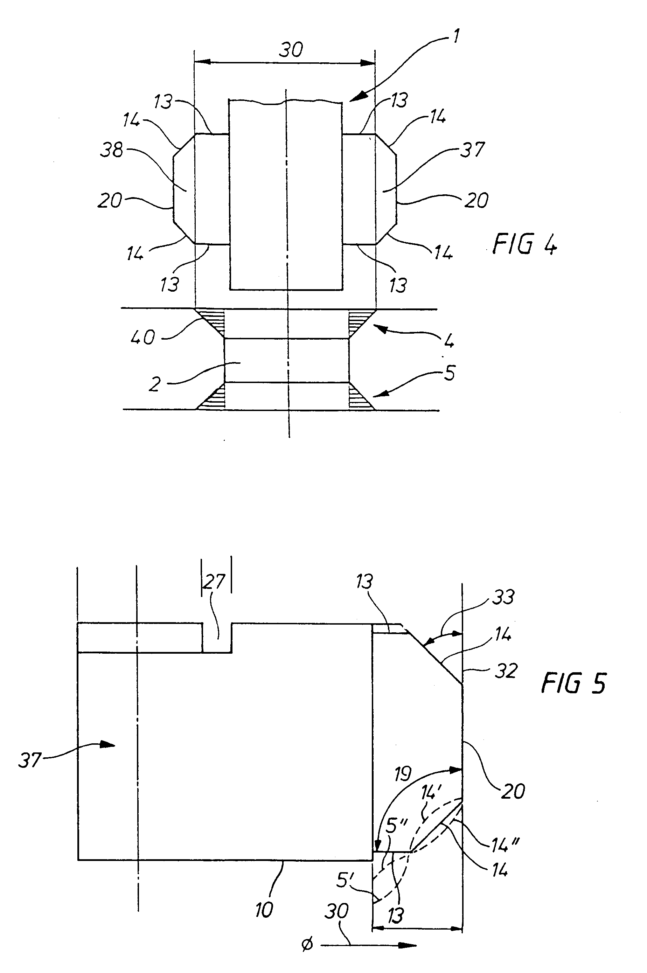

Die Wippe 23 ist federbelastet, d.h. in radial auswärts gerichteter Richtung liegt hierbei mindestens ein Bolzen 24 an einer Druckpunktschraube 26 an, die in den Werkzeugkörper des Schneidwerkzeuges 1 eingeschraubt ist. Damit ist der auswärts gehende Weg der Schneidmesser 37,38 begrenzt und damit wird der Senkdurchmesser 30 nach Figur 1 und 4 exakt eingestellt.

Nach Figur 1 sollen nun die beiden fluchtend hintereinander angeordneten Durchgangsbohrungen 2,3 vorder- und rückseitig entgratet werden.

Es kann in einem Schneidwerkzeug selbstverständlich auch nur ein einziges Schneidmesser angeordnet sein.

Nachfolgend wird nun eine erfindungsgemäße Ausführungsform des Schneidmessers 37,38 beschrieben.

Unter Bezugnahme auf die in den Figuren 4 und 5 gezeigten Ausführungsformen der erfindungsgemäßen Schneidmessere 37,38 ist zu vermerken, daß damit nicht nur gerade Fasen mit einem beliebigen Winkel zur Längsachse der Durchgangsbohrung herausarbeit bar sondern auch Fasen erstellbar sind, die im Schnitt gekrümmt sind, d.h. die im Schnitt konkav, konvex sind, oder eine beliebig andere gekrümmte Form haben.

Der Schneidmechanismus dieses Messers ist in der Figur 4 dargestellt. Hieraus ist erkennbar, daß das Schneidmesser 37 (37 und 38 in Figur 4) nach der Erfindung eine Schneidkante 13 aufweist, die in der Horizontalen liegt, d.h., im rechten Winkel 19 zur Vertikalen 32.

Je nach Formgebung der Gleitpartie 14 kann jetzt die Fase 4,5 eine fast beliebige Form aufweisen. Wie bereits vorhergehend erwähnt, kann die Gleitpartie, angepaßt an die jeweilige Anforderung, konkav, konvex oder unregelmäßig gekrümmt sein, wobei immer von einer gerade, horizontalen Schneidkante 13 ausgegangen wird, und lediglich die Gleitpartie 14 (siehe Figur 5) entsprechend der gewünschten Form der Fase gekrümmt ausgeführt ist. Der Winkel 33 und die Formgebung der Gleitpartie 14 bestimmt und definiert bei dieser Ausführungsform des Schneidmessers 37,38 also den Senkwinkel und die Form der Fase.

Neben der geradlinig ausgebildeten Gleitpartie 14 kann auch eine konkav ausgebildete Gleitpartie 14' oder 14" vorgesehen sein, und statt der gerade ausgebildeten Fase 4 und 5 nach Figur 4, würde sich dann eine spiegelbildlich gekrümmte Fase 5' bzw 5" entsprechend der gestrichelten Eintragung in Figur 5 im Werkstück ergeben.

Dies heißt also, daß spiegelbildlich der Formgebung der Gleitpartie 14 des Schneidmesser 37,38 die Fase 4,5 in die Bohrung des Werkstückes eingebracht wird. Hierbei ist immer Voraussetzung, daß die Schneidkante 13 in der Horizontalen ausgerichtet ist, wie dies in den Figuren 4 und 5 dargestellt ist.

Wichtig bei dem Schneidmesser 37,38 nach den Figuren 4 und 5 ist also die Tatsachen, daß sich, ausgehend von einer horizontalen Schneidkante 13, daran eine nicht-schneidende, zur radialen Anlage flache 20 radial einwärts abgewinkelte Gleitpartie 14 anschließt, die in einem relativ weitem Bereich eine beliebige Form haben kann, so wie die bespielsweise mit der Gleitpartie 14' oder 14" dargestellt ist.

Die Gleitpartie 14 erstreckt sich, wie bereits erwähnt, bis zur Anlagefläche 20, der parallel zur Rotationsachse verläuft.

Die Schneidkante 13 weist einen positiven Anschliff und damit einen positiven Schliff auf, während die Gleitpartie 14, 14' und 14" einen negativen Anschliff hat, um eine Schneidwirkung zu vermeiden.

Im übrigen ist aus der Figur 3 an dem darin dargestellten Schneidmesser 37 noch erkennbar, daß die Spanleitkante 12 nicht winklig ausgebildet ist, sondern, daß hier die Spanleitkante einer Bogenlinie folgt, mit einem Krümmungsradius, der in weiten Grenzen variierbar ist. Je kleiner der Krümmungsradius dieser Spanleitstufe 12, desto schärfer und aggressiver ist die Schneidwirkung des Schneidmessers.

Aus der Figur 3 ist noch erkennbar, daß sich von der Spanleitstufe 12 schräg nach vorn hin auf der Stirnseite des Schneidmessers eine Freiwinkelkante 42 erstreckt, die einen Winkel 41 zur Horizontalen aufweist.

Wichtig ist bei diesem Schneidmesser 37,38 der Spanabtrag, wie er in der Figur 4 dargestellt ist, nämlich, daß mit der Schneidkante 13 eine horizontale Abtragswirkung in der Schneidebene 40 erreicht werden kann, wobei - wie vorhergehend erwähnt - die Formgebung der Fase im Schnitt beliebig gekrümmt sein kann, was wiederum von der Formgebung der Gleitpartie 14 abhängig ist.

**Patentansprüche**

1. Entgratwerkzeug, das um eine Rotationsachse gedreht wird und wenigstens ein sich radial nach außen erstreckendes Schneidmesser (37, 38) zum beidseitigen Entgraten der Kanten von Durchgangsbohrungen eines Werkstücks aufweist, wobei das Schneidwerkzeug (37, 38) entgegen einer Federkraft radial nach außen gedrückt wird und bei Werkzeugvorschub in das Entgratwerkzeug einwärts bewegbar ist, und eine radiale Anlagefläche (20) und Schneidkanten (13) aufweist, wobei sich die radiale Anlagefläche (20) parallel zur Rotationsachse erstreckt, dadurch gekennzeichnet, daß die Schneidkanten (13) in einem Winkel von 90° zur Rotationsachse stehen, und daß die Schneidkanten (13) und die radiale Anlagefläche (20) über eine Gleitpartie (14) miteinander verbunden sind, die in einem Winkel < 90° zur radialen Anlagefläche (20) steht.

2. Entgratwerkzeug nach Anspruch 1, dadurch gekennzeichnet, daß die Gleitpartie (14) des Schneidmessers (37, 38) eine von der Schneidkante (13) ausgehende und in die radiale Anlagefläche (20) des Messers übergehende Gerade bildet.

3. Entgratwerkzeug nach Anspruch 1, dadurch gekennzeichnet, daß die (Gleitpartie) des Schneidmessers (37, 38) von der Schneidkante (13) ausgehend in die Anlagefläche (20) des Messers (37, 38) übergehend konkav, konvex (14', 14") oder unregelmäßig geformt gebildet ist.

4. Entgratwerkzeug nach Anspruch 2 und 3, dadurch gekennzeichnet, daß in Bezug auf die Schneidkante (13) des Schneidmessers (37, 38) eine Spanleitstufe (12) vorgesehen ist.

5. Entgratwerkzeug nach Anspruch 4, dadurch gekennzeichnet, daß eine Freiwinkelkante (42) in einem Winkel (41) zur Schneidkante (13) steht.

6. Entgratwerkzeug nach Anspruch 1, dadurch gekennzeichnet, daß der auswärts gehende Weg der Schneidmesser (37, 38) durch eine Druckpunktschraube (26) einstellbar ist.

**Claims**

1. A deburring tool, which is turned about a rotation axis and has at least one cutting blade (37,38) extending radially outwards, for the deburring, on both sides, of the edges of through bores of a workpiece, in which the cutting tool (37, 38) is pressed radially outwards against an elastic force and on the advance of the tool is movable inwards into the deburring tool, and has a radial contact surface (20) and cutting edges (13), in which the radial contact surface (20) extends parallel to the axis of rotation,
characterised in that
the cutting edges (13) are at an angle of 90° to the axis of rotation, and
that the cutting edges (13) and the radial contact surface (20) are connected with each other by means of a sliding part (14), which is at an angle < 90° to the radial contact surface (20).

2. A deburring tool according to Claim 1, characterised in that the sliding part (14) of the cutting blade (37, 38) forms a straight line starting trom the cutting edge (13) and continuing into the radial contact surface (20) of the blade.

3. A deburring tool according to Claim 1, characterised in that the (sliding part) of the cutting blade (37, 38), starting trom the cutting edge (13), continuing into the contact surface (20) of the blade (37, 38), is formed so as to be of concave, convex shape (14', 14'') or of irregular shape.

4. A deburring tool according to Claim 2 and 3, characterised in that in relation to the cutting edge (13) of the cutting blade (37, 38), a chip guiding step (12) is provided.

5. A deburring tool according to Claim 4, characterised in that a clearance angle edge (42) is at an angle (41) to the cutting edge (13).

6. A deburring tool according to Claim 1, characterised in that the path of the cutting blades (37, 38), moving outwards, is adjustable by a pressure point screw (26).

**Revendications**

1. Outil d'ébarbage tournant autour d'un axe de rotation et comportant au moins une lame de coupe (37, 38) s'étendant radialement vers l'extérieur et destinée à l'ébarbage bilatéral des arêtes de perçages traversants d'une pièce à usiner, étant précisé que l'outil de coupe (37, 38) est pressé radialement vers l'extérieur à l'encontre d'une force élastique, est apte à être déplacé vers l'intérieur, dans l'outil d'ébarbage, lors de l'avance de l'outil, et possède une surface d'application radiale (20) et des arêtes de coupe (13), et étant précisé que la surface d'application radiale (20) s'étend parallèlement à l'axe de rotation, caractérisé en ce que les arêtes de coupe (13) se trouvent à un angle de 90° par rapport à l'axe de rotation, et en ce que lesdites arêtes de coupe (13) et la surface d'application radiale (20) sont reliées par l'intermédiaire d'une partie de glissement (14) qui se trouve à un angle inférieur à 90° par rapport à la surface d'application radiale (20).

2. Outil d'ébarbage selon la revendication 1, caractérisé en ce que la partie de glissement (14) de la lame de coupe (37, 38) définit une droite allant de l'arête de coupe (13) à la surface d'application radiale (20) de la lame.

3. Outil d'ébarbage selon la revendication 1, caractérisé en ce que la partie de glissement de la lame de coupe (37, 38) présente, de l'arête de coupe (13) à la surface d'application (20) de la lame (37, 38), une forme concave, convexe (14', 14'') ou irrégulière.

4. Outil d'ébarbage selon les revendications 2 et 3, caractérisé en ce qu'il est prévu, par rapport à l'arête de coupe (13) de la lame de coupe (37, 38), une zone de guidage de copeaux (12).

5. Outil d'ébarbage selon la revendication 4, caractérisé en ce qu'une arête en angle de dépouille (42) se trouve à un angle (41) par rapport à l'arête de coupe (13).

6. Outil d'ébarbage selon la revendication 1, caractérisé en ce que la course des lames de coupe (37, 38) allant vers l'extérieur est réglable à l'aide d'une vis de point de poussée (26).

FIG 1

FIG 2

FIG 3

5

30

1

13

14

13

14

38

37

20

20

14

14

13

13

FIG 4

40

4

2

5

27

13

33

14

32

FIG 5

37

19

20

14'

5"

14"

5'

14

10

13

30

5'

13

∅